# EUROPEAN PATENT APPLICATION

(11) **EP 4 434 388 A1**
(43) Date of publication of application: **25.09.2024**
(21) Application number: 23163069.0
(22) Date of filing: 21.03.2023
(51) Int. Cl.: A45C 3/04, A45C 5/14, A45C 7/00

(54) **TOTE BAG AND METHOD OF FORMING A SIDEWALL THEREOF**

(71) Applicant: Codefine International SA, 1814 La Tour-de-Peilz (CH)
(72) Inventor: SCHINASI, Piero, 1814 La Tour-de-Peilz (CH)
(74) Representative: ABREMA SA

(57) **Abstract**

There is described a tote bag (B) comprising a collapsible container body (10) made of a foldable assembly of fabric panels that are joined together to form a bottom side (15) and a sidewall (11-14) including four lateral sides (11, 12, 13, 14) that jointly define an inner storage volume when the collapsible container body (10) takes an expanded state. The sidewall (11-14) is formed of at least one side panel (10A) joined at extremities along at least one vertical connection line (STa). The four lateral sides (11, 12, 13, 14) are defined by pinching the at least one side panel (10A) to form four vertical ridges that shape the sidewall (11-14) into the four lateral sides (11, 12, 13, 14), each vertical ridge being formed by pinching of the at least one side panel (10A) along a pinching line (ST_{CR}) that does not extend fully to the bottom side (15) and stops at a distance (de) from the bottom side (15). Furthermore, each vertical connection line (ST_{A}) is positioned along the sidewall (11-14) at a location that does not coincide with any one of the vertical ridges.

## Description

### TECHNICAL FIELD

The present invention generally relates to a multipurpose tote bag as for instance used as shopping bag, grocery bag and/or laundry bag.

### BACKGROUND OF THE INVENTION

Tote bags are known as such in the art.

International (PCT) Publication No. WO 2014/068545 A1 and related U.S. Patent No. US 9,999,282 B2, the contents of which are incorporated herein by reference, disclose a tote bag comprising a collapsible container body made of a foldable assembly of fabric panels that are joined together to form a bottom side and a sidewall including four lateral sides that jointly define an inner storage volume when the collapsible container body takes an expanded state. This tote bag further comprises a removable rolling support assembly to provide rolling support for the collapsible container body in the expanded state, the removable rolling support assembly including a support plate and a plurality of caster wheels provided on an underside of the support plate. More specifically, the tote bag is constructed such that the support plate can be inserted inside the inner storage volume and be removably attached at the bottom of the collapsible container body by means of a pair of inner securing flaps. The bottom side of the collapsible container body is furthermore provided with apertures to allow passage of the caster wheels therethrough in order to project away from the bottom side on the underside of the collapsible container body.

A tote bag embodying the aforementioned configuration is available on the market in various sizes and colours under the product designation HULKEN^{®} (cf. https://hulkenbaa.com/).

Yet another example of a similar tote bag with a removable rolling support assembly is disclosed in U.S. Design Patent No. US D688,499 S, the tote bag being likewise constructed such that the rolling support assembly can be inserted inside the inner storage volume and removably attached at the bottom of the collapsible container body, with the caster wheels projecting away from the bottom side through corresponding apertures formed therein to provide rolling support for the collapsible container body.

The aforementioned solutions are reasonably satisfactory but suffer from certain limitations.

The aforementioned HULKEN^{®} bag, in particular, comprises a sidewall that is formed out of one side panel that is joined at extremities along a vertical connection line that coincides with one of the four vertical ridges of the tote bag. The remaining three vertical ridges are formed by pinching the side panel along three vertical pinching lines, parallel to the vertical connection line. In other words, the vertical connection line and the three vertical pinching lines shape the sidewall into the desired four lateral sides. More specifically, the vertical connection line and the three vertical pinching lines each include one or more seam that extends along the whole height of the sidewall, up to and including the top and bottom ends. While this construction is both simple and robust, it is prone to pronounced wear, especially at the bottom four corners of the collapsible container body. This is mainly due to the relatively pointy corners resulting from the aforementioned construction, which exposes the corners to impacts and friction with surrounding objects and surfaces, which could ultimately lead to excessive local wear of the relevant corners and, especially, degradation or even rupture of the relevant seams.

Another limitation of the existing HULKEN^{®} bag resides in that selective closure of the inner storage volume, when the collapsible container body is in the expanded state, requires use of a separate cover that is removably attached to an upper portion of the tote bag.

There therefore remains a need for an improved solution.

### SUMMARY OF THE INVENTION

A general aim of the invention is to provide a tote bag that obviates the problems and limitations of known tote bags.

More specifically, an aim of the invention is to provide such a tote bag that retains the functionalities and benefits of the known HULKEN^{®} bag, while improving resistance to wear and tear.

A further aim of the invention is to provide such a tote bag that is cost-efficient to produce.

These aims and others are achieved thanks to the solutions defined in the claims.

In accordance with the invention, there is provided a tote bag, the features of which are recited in claim 1, namely such a tote bag comprising a collapsible container body made of a foldable assembly of fabric panels that are joined together to form a bottom side and a sidewall including four lateral sides that jointly define an inner storage volume when the collapsible container body takes an expanded state. The sidewall is formed of at least one side panel joined at extremities along at least one vertical connection line. According to the invention, the four lateral sides are defined by pinching the at least one side panel to form four vertical ridges that shape the sidewall into the four lateral sides, each vertical ridge being formed by pinching of the at least one side panel along a pinching line that does not extend fully to the bottom side and stops at a distance from the bottom side. Furthermore, each vertical connection line is positioned along the sidewall at a location that does not coincide with any one of the vertical ridges.

By way of preference, the sidewall includes a pair of opposite short lateral sides and a pair of opposite long lateral sides, and each vertical connection line is positioned to coincide with a vertical midline of a corresponding one of the short lateral sides. More specifically, in accordance with one embodiment, the sidewall is formed of one side panel joined at extremities along a single vertical connection line that coincides with a vertical midline of one of the short lateral sides, which side panel is pinched along four distinct pinching lines to form the four vertical ridges. In accordance with another embodiment, the sidewall is formed of two side panels joined at extremities along two vertical connection lines each coinciding with a vertical midline of a corresponding one of the short lateral sides, each of the two side panels being pinched along two distinct pinching lines to form the four vertical ridges.

Advantageously, the short lateral sides of the collapsible container body are each provided with a gusset fold designed to allow outward folding of the opposite short lateral sides into flat-folded gusset sections, each vertical connection line extending partly along a portion of the gusset fold. In this latter context, the collapsible container body is preferably configured to be foldable into a flattened configuration where the opposite short lateral sides are folded outward along the gusset fold into the flat-folded gusset sections, which flat-folded gusset sections are foldable inward over lateral sections of a first one of the long lateral sides, while a second one of the long lateral sides is foldable inward to align the bottom side with the second long lateral side.

The extremities of the at least one side panel are preferably stitched together along each vertical connection line, each vertical connection line including at least one seam that extends along substantially a whole height of the sidewall.

The at least one side panel is preferably stitched along each pinching line, each pinching line including at least one seam that extends only along part of a whole height of the sidewall.

In accordance with a particularly preferred embodiment, the tote bag further comprises a releasable cover panel that forms an integral part of the collapsible container body, which releasable cover panel is provided at an upper end of the sidewall to allow selective closure of the inner storage volume when the collapsible container body is in the expanded state. In that context, each pinching line likewise preferably further stops at a distance from the upper end of the sidewall. The releasable cover panel may in particular be permanently attached to one of the lateral sides (especially one of the long lateral sides) and be releasably attachable to the remaining ones of the lateral sides, preferably by means of a zipper, to close the inner storage volume.

In accordance with an advantageous embodiment of the invention, the tote bag further comprises a rolling support assembly to provide rolling support for the collapsible container body in the expanded state, the rolling support assembly including a support plate and a plurality of caster wheels provided on an underside of the support plate. In this latter context, the collapsible container body preferably further comprises a retaining structure configured to securely hold the support plate outside of the inner storage volume against an underside of the bottom side.

Advantageously, the collapsible container body may be structured such that the sidewall exhibits rounded corners below and, preferably, above each of the vertical ridges.

The at least one side panel may be made of at least two outer pieces of fabric and an intermediate piece of bubble wrap interposed between the two outer pieces of fabric, as taught in International (PCT) Publication No. WO 2014/068545 A1 and related U.S. Patent No. US 9,999,282 B2. Furthermore, the outer pieces of fabric may be made of or comprise at least one sheet of woven fabric produced out of strands of synthetic or non-synthetic material, such as polypropylene (PP) strands. By way of preference, one or each of the outer pieces of fabric may further comprise an outer layer, such as a biaxially-oriented polypropylene (BOPP) film, a cast polypropylene (CPP) film or polypropylene (PP) coating, that is applied on an outer side of the sheet of woven fabric, for instance by lamination or extrusion coating.

There is also claimed a method of forming a sidewall of a tote bag of the invention, the features of which are recited in claim 15, namely such a method comprising (i) providing one or two side panels, (ii) joining extremities of the one or two side panels along one or, respectively, two vertical connection lines to form the sidewall, and (iii) forming four vertical ridges that shape the sidewall into the four lateral sides by pinching the one or two side panels along four pinching lines that do not extend fully to the bottom side and stop at a distance from the bottom side, wherein joining of the extremities of the one or two side panels includes positioning each vertical connection lines at a location that does not coincide with any one of the vertical ridges.

Further advantageous embodiments of the invention are discussed below.

### BRIEF DESCRIPTION OF THE DRAWINGS

Other features and advantages of the present invention will appear more clearly from reading the following detailed description of embodiments of the invention which are presented solely by way of non-restrictive examples and are illustrated by the appended drawings in which:
Figure 1A is a photographic illustration of a tote bag in accordance with a first embodiment of the invention, as seen from a first viewing angle, the tote bag being shown with a collapsible container body thereof in an expanded state;
Figure 1B is a photographic illustration of the tote bag of Figure 1A as seen substantially perpendicularly to one of the long lateral sides of the tote bag;
Figure 1C is a photographic illustration of the tote bag of Figures 1A-B as seen from a short lateral side opposite to that shown in Figure 1A;
Figure 1D is a photographic illustration of the tote bag of Figures 1A-C as seen from a top side of the tote bag, showing a releasable cover panel of the tote bag in a configuration where the releasable cover panel closes an inner storage volume of the collapsible container body in the expanded state;
Figure 1E is a photographic illustration of the tote bag of Figures 1A-D as seen from the top side of the tote bag, showing the releasable cover panel of the tote bag in an open, released configuration where the releasable cover panel is folded inside the inner storage volume of the collapsible container body;
Figure 2A is a photographic illustration of one vertical ridge of the tote bag of Figures 1A-E,
Figure 2B is a photographic illustration of a close-up of an upper portion of the vertical ridge of the tote bag shown in Figure 2A;
Figure 2C is a photographic illustration of a close-up of a bottom portion of the vertical ridge of the tote bag shown in Figure 2A;
Figure 2D is a photographic illustration of a close-up of a portion of the underside of the tote bag of Figures 1A-E;
Figure 2E is a photographic illustration of a close-up of a portion of the top side of the tote bag of Figures 1A-E;
Figure 3 is a schematic illustration of a tote bag in accordance with an embodiment of the invention showing the collapsible container body of the tote bag in an expanded state, detached from a rolling support assembly;
Figures 4A and 4B are schematic illustrations of the tote bag of Figure 3 partially folded into a flattened configuration as shown from two opposite long lateral sides;
Figure 5A is a photographic illustration of a tote bag in accordance with a second embodiment of the invention, as seen from a first viewing angle, the tote bag being likewise shown with a collapsible container body thereof in an expanded state;
Figure 5B is a photographic illustration of the tote bag of Figure 5A as seen from the top side of the tote bag, showing a releasable cover panel of the tote bag in an open, released configuration where the releasable cover panel is folded inside the inner storage volume of the collapsible container body;
Figure 5C is a photographic illustration of the tote bag of Figures 5A-B as seen from a first one of the two short lateral sides;
Figure 5D is a photographic illustration of the tote bag of Figures 5A-C as seen from the other one of the two short lateral sides;
Figure 5E is a photographic illustration of the tote bag of Figures 5A-D as seen from a top side of the tote bag, showing the releasable cover panel of the tote bag in a configuration where the releasable cover panel closes an inner storage volume of the collapsible container body in the expanded state;
Figure 5F is a photographic illustration of the tote bag of Figures 5A-E, with the releasable cover panel in the closed configuration, showing part of the tote bag from a top side, including the first short lateral side; and
Figure 5G is a photographic illustration of the tote bag of Figures 5A-F, with the releasable cover panel in the closed configuration, showing part of the tote bag from a top side, including the second short lateral side.

### DETAILED DESCRIPTION OF EMBODIMENTS OF THE INVENTION

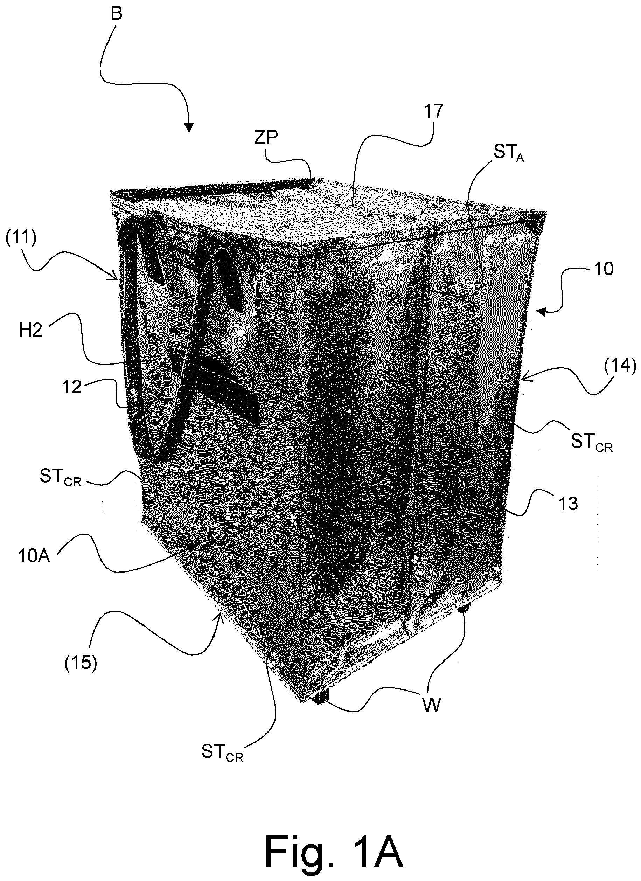

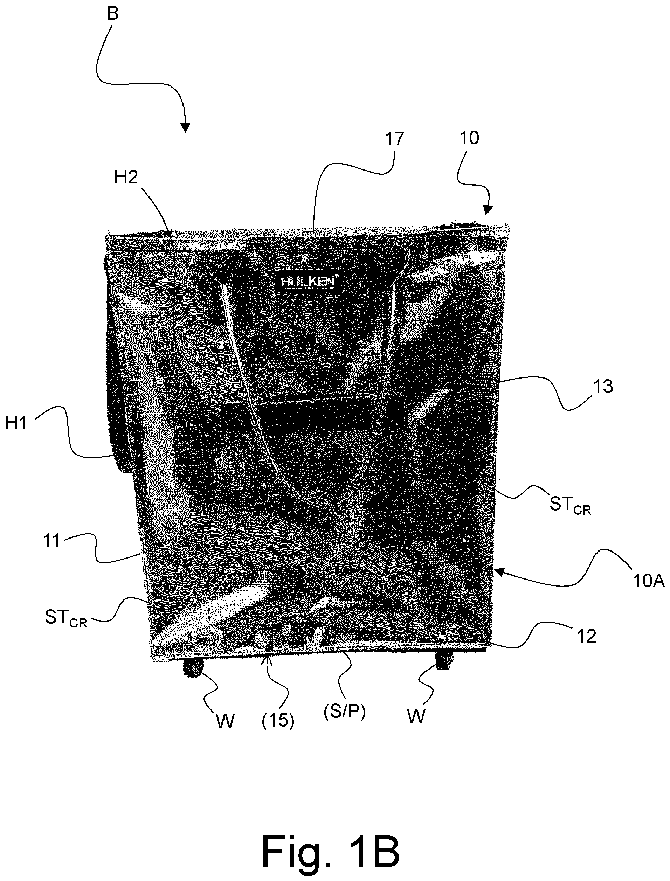

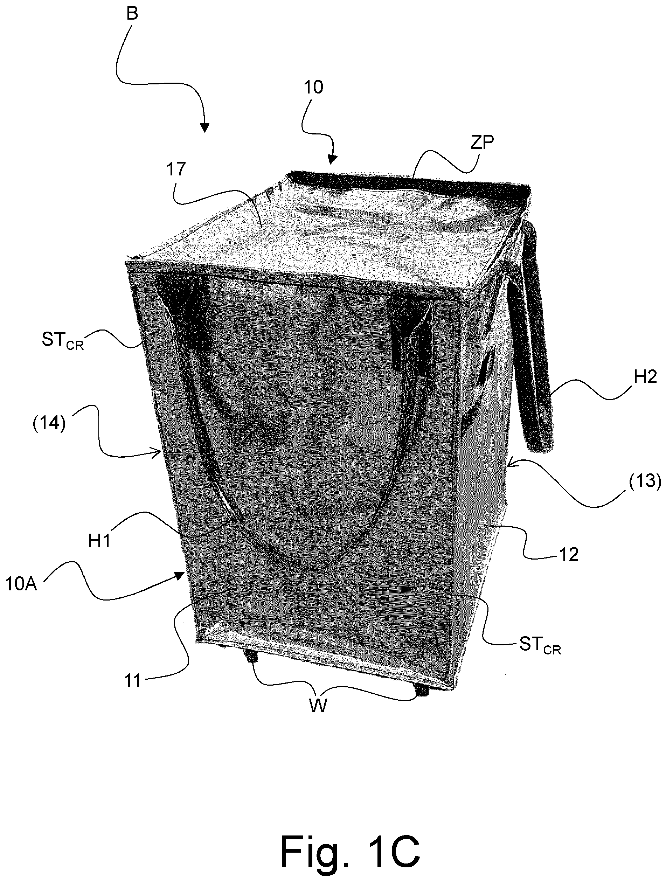

The present invention will be described in relation to various illustrative embodiments as shown in particular in Figures 1A-E to 5A-G. It shall be understood that the scope of the invention encompasses all combinations and sub-combinations of the features of the invention disclosed herein as defined by the appended claims.

Figures 1A to 1E are photographic illustrations of a tote bag B in accordance with a first embodiment of the invention. The tote bag B comprises a collapsible container body 10 that is made of a foldable assembly of fabric panels that are joined together to form a bottom side 15 and a sidewall 11-14 including for lateral sides 11, 12, 13, 14, namely, a pair of short lateral sides 11, 13 and a pair of long lateral sides 12, 14. The bottom side 15 and four lateral sides 11, 12, 13, 14 jointly define an inner storage volume when the collapsible container body 10 is in the expanded state as shown in Figures 1A-E. As can be seen in Figures 1A-E, four vertical ridges shape the sidewall 11-14 into the four lateral sides 11, 12, 13 and 14.

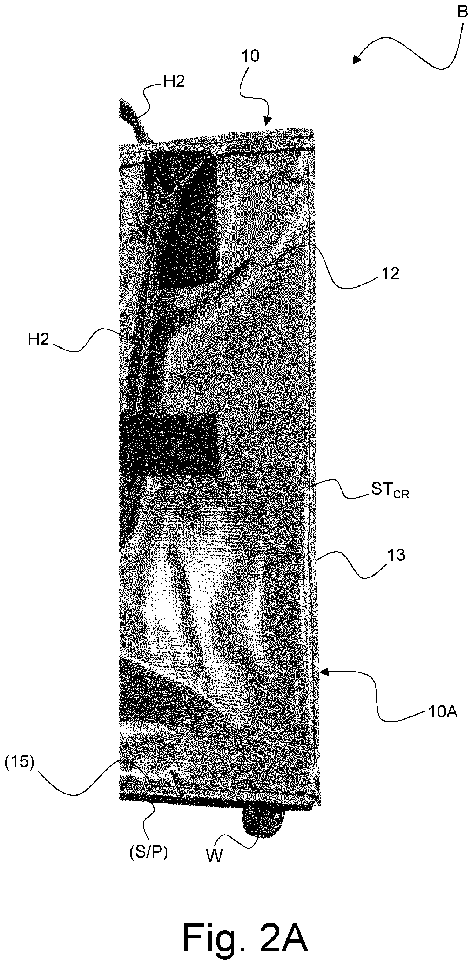

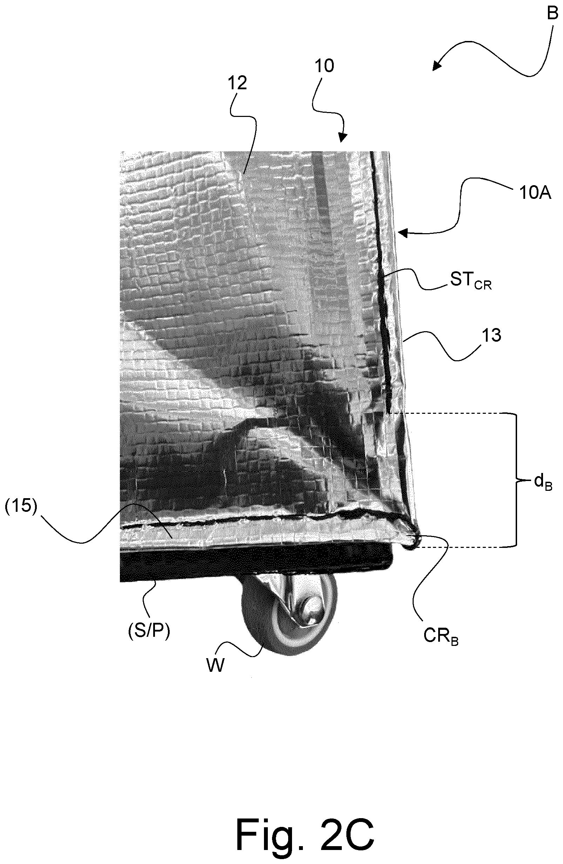

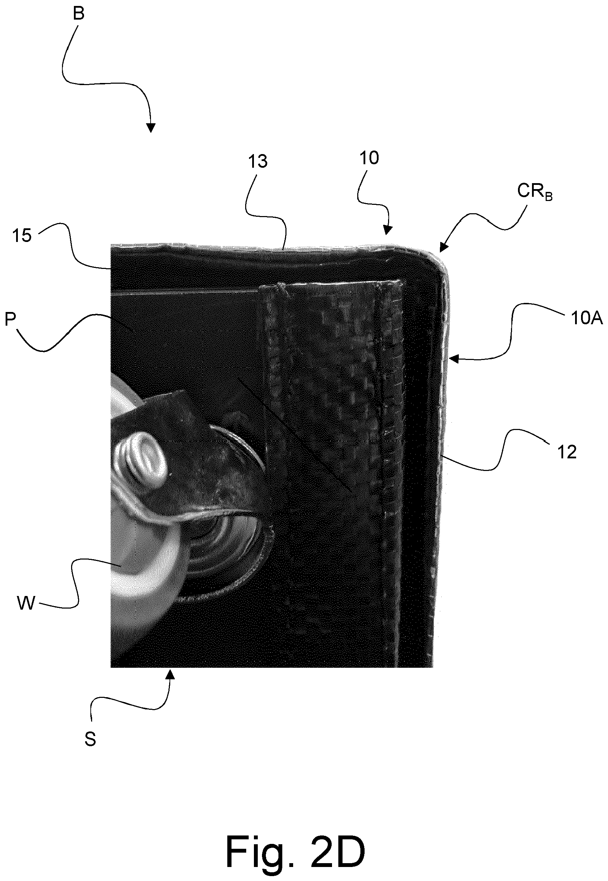

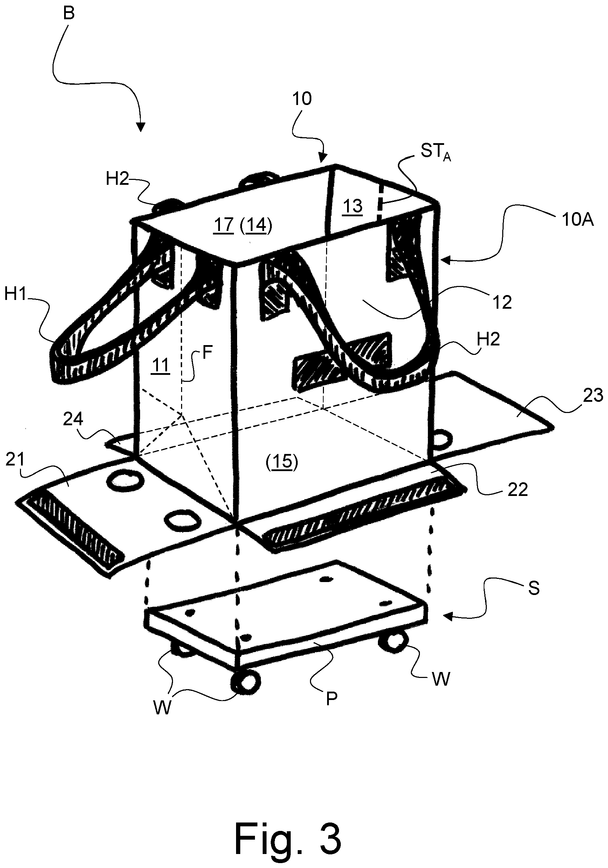

The tote bag B further comprises a rolling support assembly S (as shown in the schematic illustration of Figure 3) to provide rolling support for the collapsible container body 10 in the expanded state. The rolling support assembly S includes a support plate P and a plurality of caster wheels W provided on an underside of the support plate P. The caster wheels W are partly visible in Figures 1A-C, as well as in Figures 2A, 2C and 2D.

The support plate P may be made of any desired material and exhibit any adequate structure. Light-weight materials and structures are preferred. In particular, the support plate P may be made of board of synthetic material including a honeycomb spacer structure that ensures adequate rigidity and strength, while remaining light-weight.

The rolling support assembly S is preferably removably attached to the underside of the tote bag B, namely underneath the bottom side 15, by means of a releasable retaining structure 21-24 (one possible embodiment being shown in Figure 3), which will not be described extensively as it forms the subject-matter of European patent application No. 23159231.2 of February 28, 2023, titled "ROLLING TOTE BAG", in the name of the present Applicant, the content of which is incorporated herein by reference.

In the illustrated example, multiple handles H1, H2 are secured to the lateral sides 11, 12, 14, including a pair of handles H2 secured to the opposite long lateral sides 12, 14 and a third handle H1 secured on one of the short lateral sides 11, 13, namely short lateral side 11 in the illustrated example, to facilitate rolling of the tote bag B in use.

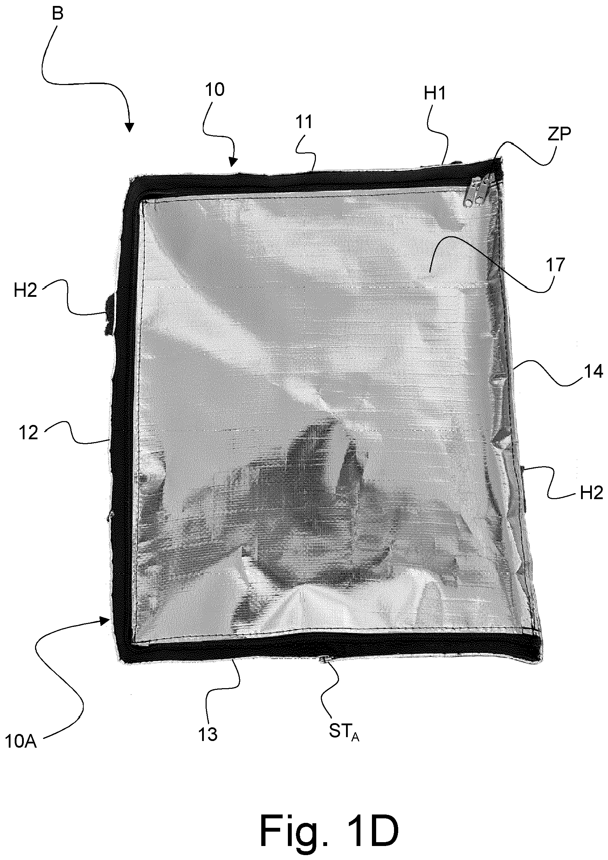

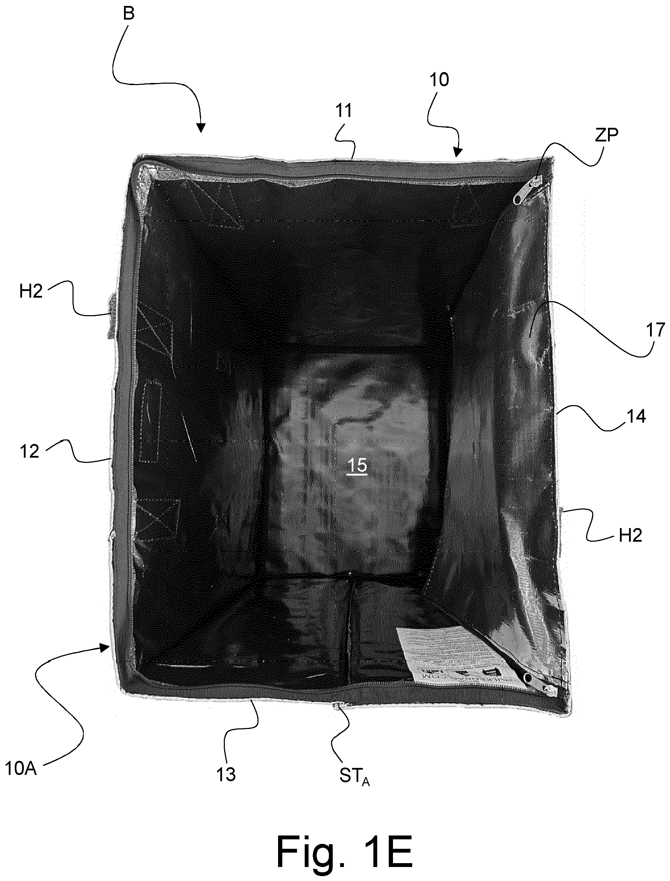

According to this first embodiment of the invention, the sidewall 11-14 is formed of one side panel, designated 10A, that is joined at extremities along a single vertical connection line ST_{A} that preferably coincides with a vertical midline of one of the short lateral sides 11, 13, namely short lateral side 13 in the illustrated example, as shown in Figures 1A, 1D and 1E.

In the illustrated example, the extremities of the side panel 10A are stitched together along the vertical connection line ST_{A} to form at least one seam that extends along substantially the whole height of the sidewall 11-14. In practice, more than one seam may be provided along the vertical connection line ST_{A}, if desired. The extremities of the side panel 10A may additionally be fused and/or glued together to further improve resistance of the vertical connection line STa. While stitching is contemplated, other solutions could potentially be contemplated to ensure adequate joining of the extremities of the side panel 10A. Stitching however remains a particularly suitable solution to ensure desired robustness.

According to this first embodiment of the invention, the side panel 10A is pinched along four distinct pinching lines ST_{CR} to form the four vertical ridges of the tote bag B that shape the sidewall 11-14 into the four lateral sides 11, 12, 13 and 14, pinching being made in a particular way that will be explained in greater detail with reference to Figures 2A-E.

Also visible in Figures 1A-E is a releasable cover panel 17 that forms an integral part of the collapsible container body 10. This releasable cover panel 17 is provided at an upper end of the sidewall 11-14 to allow selective closure of the inner storage volume when the collapsible container body 10 is in the expanded state, as shown in the illustrations of Figures 1A-D. More specifically, the releasable cover panel 17 is permanently attached to one of the lateral sides 11, 12, 13, 14 (here long lateral side 14) and releasable attachable to the remaining ones (namely lateral sides 11, 12, 13) to close the inner storage volume. By way of preference, cover panel 17 is releasably attached to the relevant lateral sides by means of a zipper ZP, which is facilitated thanks to the particular construction of the tote bag B.

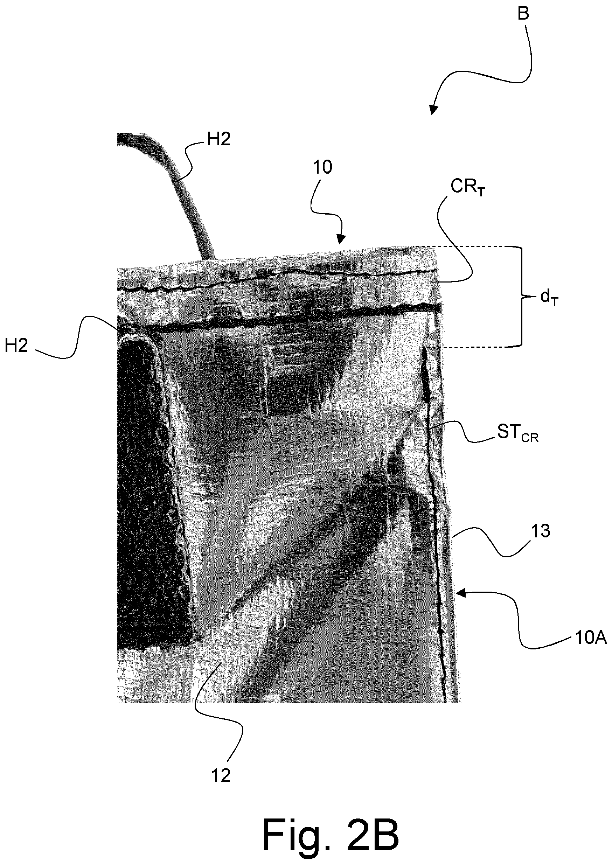

Referring to Figures 2A-E, one can indeed note that each pinching line ST_{CR} does not extend fully to the bottom side 15 and stops at a distance de (see Figure 2C) from the bottom side 15. In the illustrated example, the same holds true at the upper end of the sidewall 11-14, namely each pinching line ST_{CR} further stops at a distance d_{T} (see Figure 2B) from the upper end of the sidewall 11-14 where the zipper ZP is situated. Distances de and d_{T} may be of the order of about 2 cm.

By way of preference, the side panel 10A is stitched along each pinching line ST_{CR} to form at least one seam that, in contrast to the stitching performed along the vertical connection line ST_{A}, extends only along part of the whole height of the sidewall 11-14, as shown in Figures 2A-C. This is sufficient to suitably pinch the side panel 10A and thereby form the four vertical ridges that shape the sidewall 11-14 into the four lateral sides 11, 12, 13, 14.

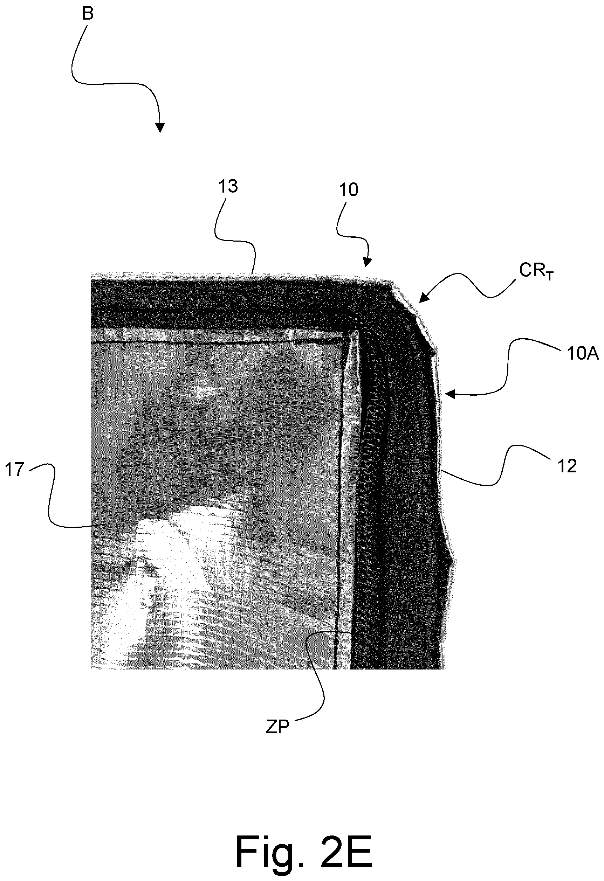

By stopping the pinching lines ST_{CR} short of the bottom side 15 and of the upper end of the sidewall 11-14, it is advantageously possible to further structure the collapsible container body 10 such that the sidewall 11-14 exhibits rounded corners CR_{B}, CR_{T} below and above each of the vertical ridges, as shown in Figures 2D and 2E.

The collapsible container body 10 is advantageously constructed such that the side panel 10A is made of at least two outer pieces of fabric and an intermediate piece of bubble wrap interposed between the two outer pieces of fabric, as taught by International (PCT) Publication No. WO 2014/068545 A1 and related U.S. Patent No. US 9,999,282 B2, the contents of which are incorporated herein by reference in that regard. This provides some level of structural reinforcement to the collapsible container body 10 which can retain its expanded state, while still allowing the collapsible container body 10 to be folded to a compact configuration for storage.

The outer pieces of fabric may especially be made of or comprise at least one sheet of woven fabric produced out of polypropylene (PP) strands. Other synthetic or non-synthetic materials could however be contemplated without departing from the scope of the invention as defined by the appended claims. Preferably, one or each of the outer pieces of fabric further comprises an outer layer, such as but not limited to a biaxially-oriented polypropylene (BOPP) film that is laminated on an outer side of the sheet of woven fabric, which allows customization of the appearance of either one or both of the external and internal visible sides of the collapsible container body 10. Lamination of a BOPP film is advantageously contemplated, but the outer layer could be applied in any other suitable manner. Alternatives may consist in the lamination of a cast polypropylene (CPP) film or the application of a polypropylene (PP) coating by extrusion coating.

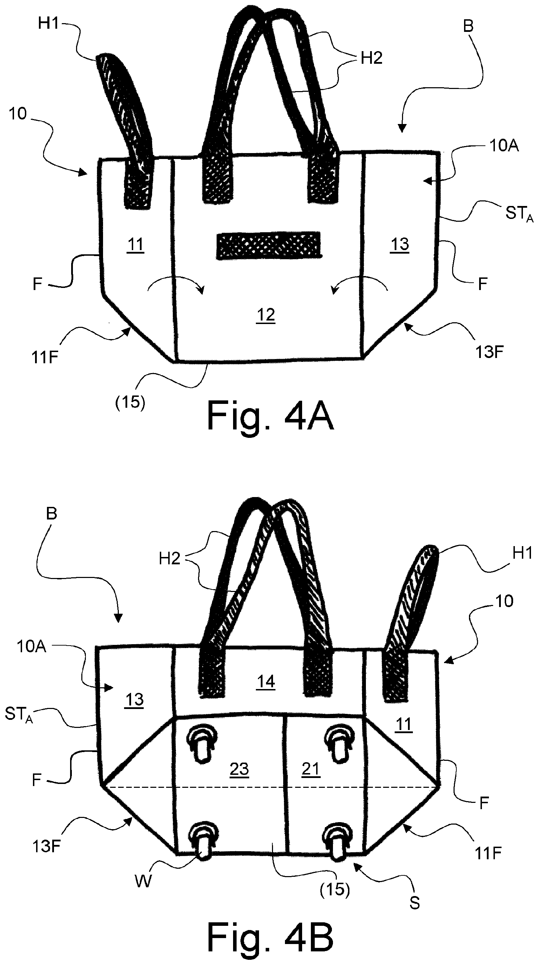

The collapsible container body 10 advantageously retains the ability to be foldable into a flattened configuration and each of the opposite short lateral sides 11, 13 may advantageously be provided with a gusset fold F (as shown schematically in Figure 3) designed to allow outward folding of the opposite short lateral sides 11, 13, as shown schematically in Figures 4A and 4B, into flat-folded gusset sections 11F, 13F. Such flat-folded gusset sections 11F, 13F may conveniently be folded inward over lateral sections of a first one of the long lateral sides 12, 14 (here later side 12), as indicated schematically by the pair of arrows in Figure 4A, while the second, opposite long lateral side 14 of the collapsible container body 10 is folded inward, along a horizontal fold, to align the bottom side 15 and associated rolling support assembly S with the second long lateral side 14, as shown in Figure 4B.

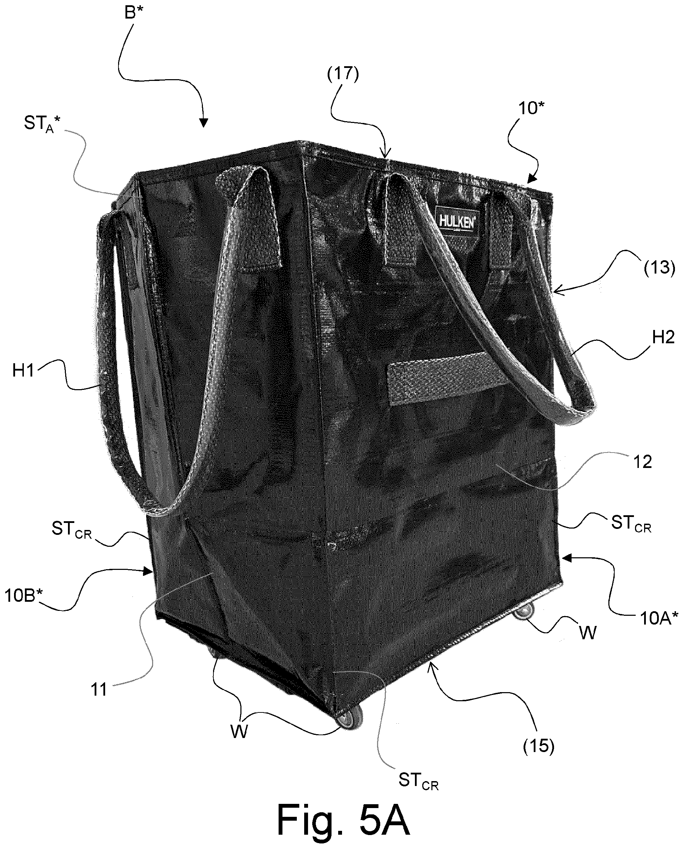

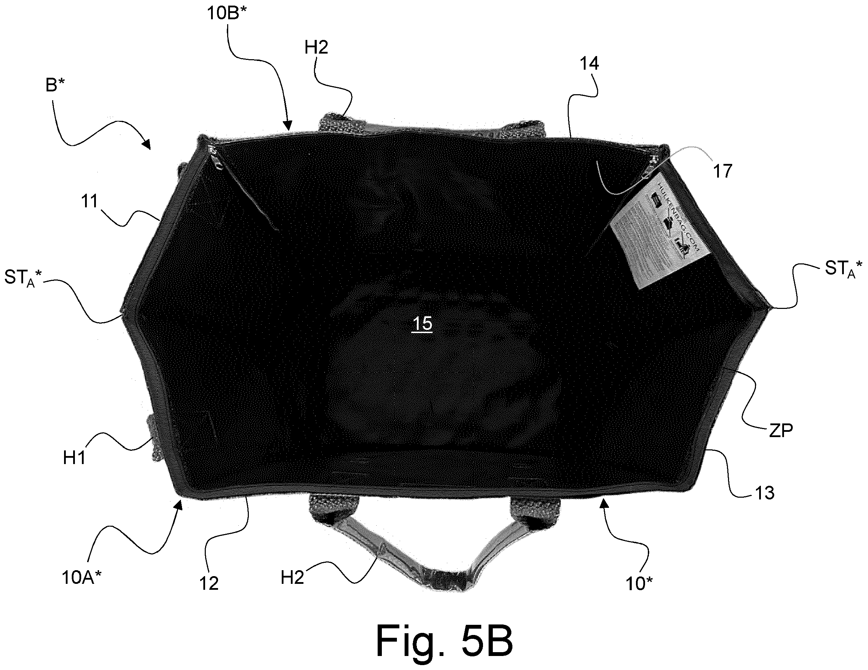

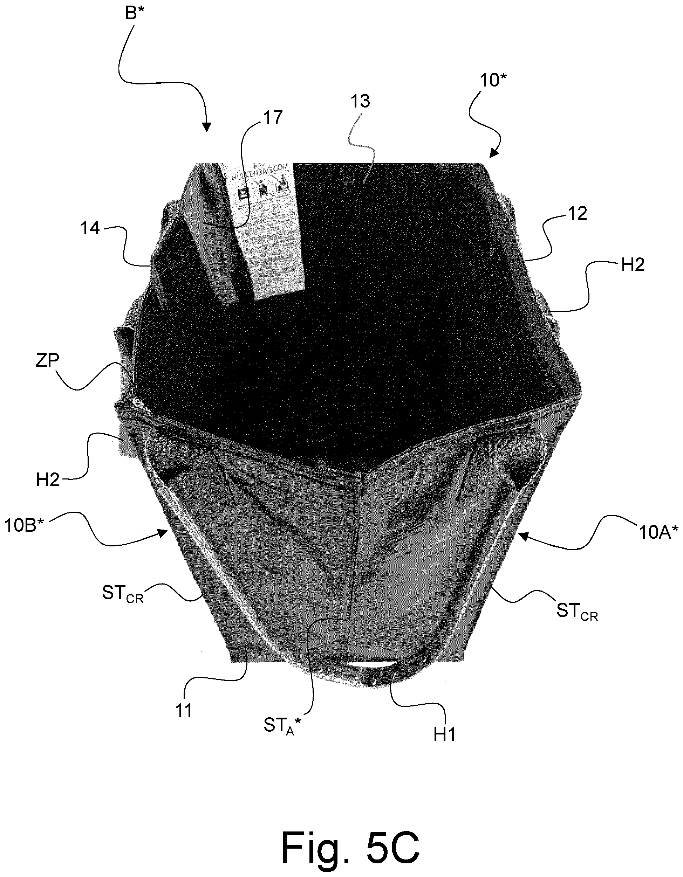

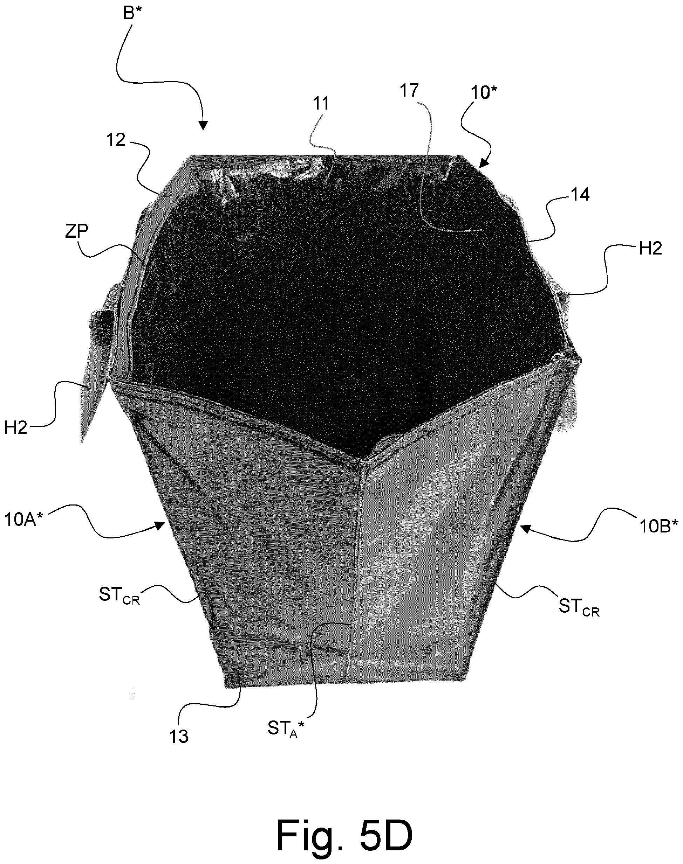

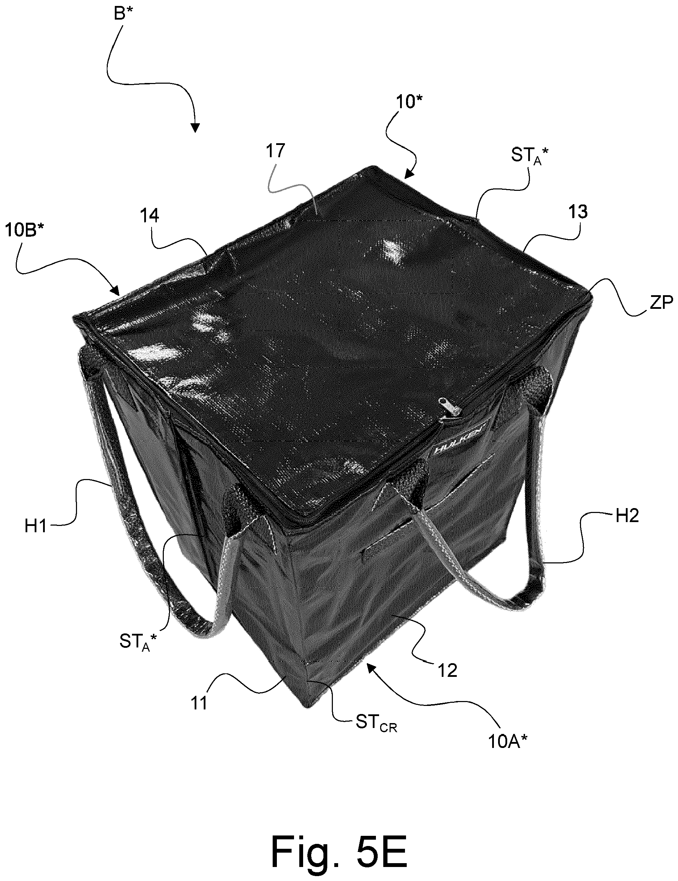

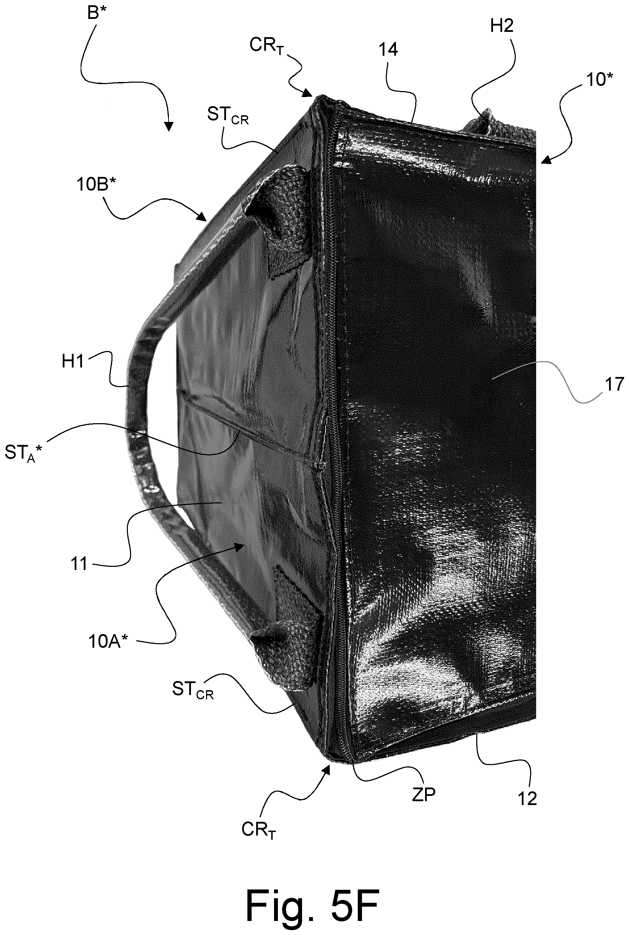

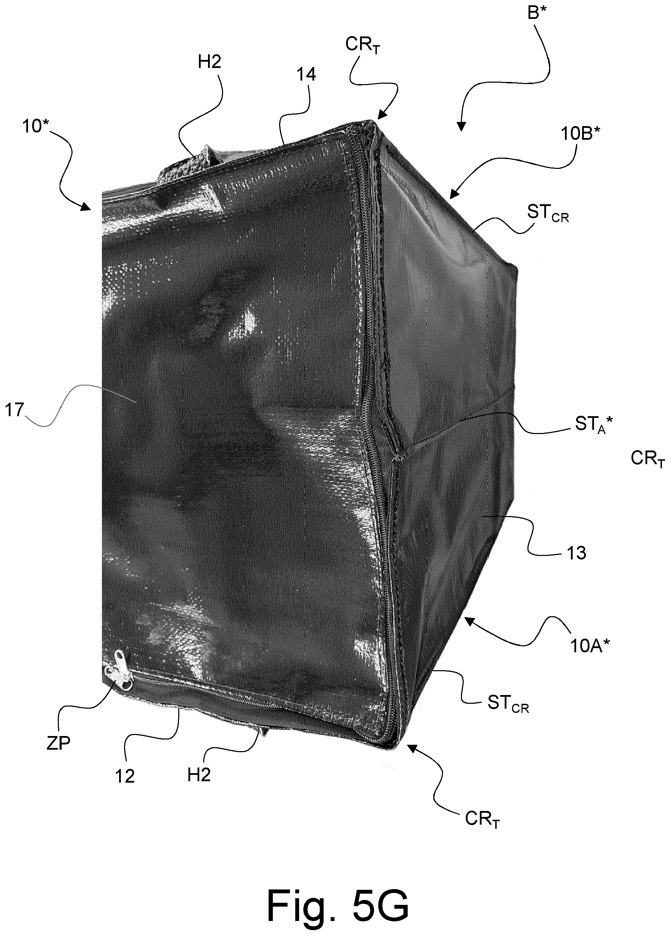

Figures 5A to 5G are photographic illustrations of a tote bag B* in accordance with a second embodiment of the invention. The tote bag B* likewise comprises a collapsible container body 10* that is made of a foldable assembly of fabric panels that are joined together to form a bottom side 15 and a sidewall 11-14 including for lateral sides 11, 12, 13, 14 (as well as a releasable cover panel 17) that jointly define an inner storage volume when the collapsible container body 10* is in the expanded state as shown in Figures 5A-G.

A main difference between this second embodiment of the invention and the first embodiment that has previously been described resides in the fact that the sidewall 11-14 is formed of two side panels, designated 10A* and 10B*, that are joined at extremities along two vertical connection lines ST_{A}* that each preferably coincide with a vertical midline of a corresponding one of the short lateral sides 11, 13. In other words, in the illustrated example, one will understand that a first vertical connection line ST_{A}* is formed along a vertical midline of the first short lateral side 11, while a second vertical connection line ST_{A}* is formed along a vertical midline of the second, opposite short lateral side 13.

An advantage of this second embodiment over the first embodiment resides in that both vertical connection lines ST_{A}* extend partly along a portion of the relevant gusset folds F, which helps imparting a slightly hexagonal shape to the collapsible container body 10* (as shown e.g. in Figures 5A-D) and assist folding of the tote bag as discussed with reference to Figures 4A-B. This is also partly achieved by the first embodiment, however mainly on one side.

Various modifications and/or improvements may be made to the above-described embodiments without departing from the scope of the invention as defined by the appended claims. For instance, while a zipper is preferably used to releasably attach the cover panel to the relevant lateral sides of the collapsible container body, other solutions could be contemplated, including hook-and-loop or snap fasteners. In addition, while preferred, the releasable cover panel constitutes an optional feature that may be omitted entirely.

Furthermore, in other embodiments, the vertical connection line(s) may be arranged as a location, other than that of a vertical ridge, that is potentially offset from the vertical midline of the relevant lateral side.

### LIST OF REFERENCE NUMERALS AND SIGNS USED THEREIN

- B: tote bag (first embodiment)
- B*: tote bag (second embodiment)
- 10: collapsible (foldable) container body of tote bag B
- 10*: collapsible (foldable) container body of tote bag B*
- 10A: side panel forming sidewall 11-14 (first embodiment)
- 10A*, 10B*: side panels forming sidewall 11-14 (second embodiment)
- 11: (first) short lateral side of collapsible container body 10, resp. 10* (part of sidewall 11-14)
- 12: (first) long lateral side of collapsible container body 10, resp. 10* (part of sidewall 11-14)
- 13: (second) short lateral side of collapsible container body 10, resp. 10* (part of sidewall 11-14)
- 14: (second) long lateral side of collapsible container body 10, resp. 10* (part of sidewall 11-14)
- F: gusset fold formed on each short lateral side 11, 13
- 11F: flat-folded gusset section formed by outward folding of short lateral side 11 along gusset fold F
- 13F: flat-folded gusset section formed by outward folding of short lateral side 13 along gusset fold F
- 15: bottom side of collapsible container body 10, resp. 10*
- 17: releasable cover panel forming an integral part of the collapsible container body 10, resp. 10* (permanently attached to long lateral side 14)
- ZP: zipper for releasably attaching cover panel 17 to remaining lateral sides 11, 12, 13
- S: rolling support assembly removably attached to bottom side of collapsible container body 10, resp. 10*
- P: support plate
- W: caster wheels provided on underside of support plate P
- H1, H2: handles
- 21-24: retaining structure for attachment of rolling support assembly S to bottom side of collapsible container body 10, resp. 10*
- ST_{A}: vertical connection line along which extremities of side panel 10A are joined (first embodiment)
- ST_{A}*: vertical connection lines along which extremities of side panels 10A*, 10B* are joined (second embodiment)
- ST_{CR}: pinching lines along which side panel 10A and side panels 10A*, 10B* are pinched to form vertical ridges and shape sidewall 11-14 into the four lateral sides 11, 12, 13, 14
- d_{B}: distance separating bottom end of pinching line ST_{CR} and bottom side 15
- d_{T}: distance separating upper end of pinching line ST_{CR} and upper end of sidewall 11-14
- CR_{B}: rounded corners formed below vertical ridges
- CR_{T}: rounded corners formed above vertical ridges

## Claims

1. A tote bag (B; B*) comprising a collapsible container body (10; 10*) made of a foldable assembly of fabric panels that are joined together to form a bottom side (15) and a sidewall (11-14) including four lateral sides (11, 12, 13, 14) that jointly define an inner storage volume when the collapsible container body (10; 10*) takes an expanded state, wherein the sidewall (11-14) is formed of at least one side panel (10A; 10A*, 10B*) joined at extremities along at least one vertical connection line (ST_{A}; ST_{A}*),
**characterized in that** the four lateral sides (11, 12, 13, 14) are defined by pinching the at least one side panel (10A; 10A*, 10B*) to form four vertical ridges that shape the sidewall (11-14) into the four lateral sides (11, 12, 13, 14),
**in that** each vertical ridge is formed by pinching of the at least one side panel (10A; 10A*, 10B*) along a pinching line (ST_{CR}) that does not extend fully to the bottom side (15) and stops at a distance (de) from the bottom side (15),
and **in that** each vertical connection line (ST_{A}; ST_{A}*) is positioned along the sidewall (11-14) at a location that does not coincide with any one of the vertical ridges.

2. The tote bag (B; B*) according to claim 1, wherein the sidewall includes a pair of opposite short lateral sides (11, 13) and a pair of opposite long lateral sides (12, 14),
and wherein each vertical connection line (ST_{A}; ST_{A}*) is positioned to coincide with a vertical midline of a corresponding one (13; 11, 13) of the short lateral sides (11, 13).

3. The tote bag (B) according to claim 2, wherein the sidewall (11-14) is formed of one side panel (10A) joined at extremities along a single vertical connection line (ST_{A}) that coincides with a vertical midline of one (13) of the short lateral sides (11, 13), which side panel (10A) is pinched along four distinct pinching lines (ST_{CR}) to form the four vertical ridges.

4. The tote bag (B) according to claim 2, wherein the sidewall (11-14) is formed of two side panels (10A*, 10B*) joined at extremities along two vertical connection lines (ST_{A}*) each coinciding with a vertical midline of a corresponding one (11, 13) of the short lateral sides (11, 13), each of the two side panels (10A*, 10B*) being pinched along two distinct pinching lines (ST_{CR}) to form the four vertical ridges.

5. The tote bag (B; B*) according to any one of claims 2 to 4, wherein the short lateral sides (11, 13) of the collapsible container body (10; 10*) are each provided with a gusset fold (F) designed to allow outward folding of the opposite short lateral sides (11, 13) into flat-folded gusset sections (11F, 13F), each vertical connection line (ST_{A}; ST_{A}*) extending partly along a portion of the gusset fold (F),
and wherein the collapsible container body (10; 10*) is preferably configured to be foldable into a flattened configuration where the opposite short lateral sides (11, 13) are folded outward along the gusset fold (F) into the flat-folded gusset sections (11F, 13F), which flat-folded gusset sections (11F, 13F) are foldable inward over lateral sections of a first one (12) of the long lateral sides (12, 14), while a second one (14) of the long lateral sides (12, 14) is foldable inward to align the bottom side (15) with the second long lateral side (14).

6. The tote bag (B; B*) according to any one of the preceding claims, wherein the extremities of the at least one side panel (10A; 10A*, 10B*) are stitched together along each vertical connection line (ST_{A}; ST_{A}*) , each vertical connection line (ST_{A}; ST_{A}*) including at least one seam that extends along substantially a whole height of the sidewall (11-14).

7. The tote bag (B; B*) according to any one of the preceding claims, wherein the at least one side panel (10A; 10A*, 10B*) is stitched along each pinching line (ST_{CR}), each pinching line (ST_{CR}) including at least one seam that extends only along part of a whole height of the sidewall (11-14).

8. The tote bag (B; B*) according to any one of the preceding claims, further comprising a releasable cover panel (17) that forms an integral part of the collapsible container body (10; 10*), which releasable cover panel (17) is provided at an upper end of the sidewall (11-14) to allow selective closure of the inner storage volume when the collapsible container body (10; 10*) is in the expanded state.

9. The tote bag (B; B*) according to claim 8, wherein each pinching line (ST_{CR}) further stops at a distance (d_{T}) from the upper end of the sidewall (11-14).

10. The tote bag (B; B*) according to claim 8 or 9, wherein the releasable cover panel (17) is permanently attached to one (14) of the lateral sides (11, 12, 13, 14) and releasably attachable to the remaining ones (11, 12, 13) of the lateral sides (11, 12, 13, 14), preferably by means of a zipper (ZP), to close the inner storage volume.

11. The tote bag (B; B*) according to any one of the preceding claims, further comprising a rolling support assembly (S) to provide rolling support for the collapsible container body (10; 10*) in the expanded state, the rolling support assembly (S) including a support plate (P) and a plurality of caster wheels (W) provided on an underside of the support plate (P),
wherein the collapsible container body (10; 10*) preferably further comprises a retaining structure (21-24) configured to securely hold the support plate (P) outside of the inner storage volume against an underside of the bottom side (15).

12. The tote bag (B; B*) according to any one of the preceding claims, wherein the collapsible container body (10; 10*) is structured such that the sidewall (11-14) exhibits rounded corners (CR_{B}, CR_{T}) below and, preferably, above each of the vertical ridges.

13. The tote bag (B; B*) according to any one of the preceding claims, wherein the at least one side panel (10A; 10A*, 10B*) is made of at least two outer pieces of fabric and an intermediate piece of bubble wrap interposed between the two outer pieces of fabric.

14. The tote bag (B; B*) according to claim 13, wherein the outer pieces of fabric are made of or comprise at least one sheet of woven fabric produced out of strands of synthetic or non-synthetic material, such as polypropylene (PP) strands,
and wherein one or each of the outer pieces of fabric preferably further comprises an outer layer, such as a biaxially-oriented polypropylene (BOPP) film, a cast polypropylene (CPP) film or polypropylene (PP) coating, that is applied on an outer side of the sheet of woven fabric, for instance by lamination or extrusion coating.

15. A method of forming a sidewall (11-14) of a tote bag (B; B*) as defined in any one of the preceding claims, comprising:
providing one or two side panels (10A; 10A*, 10B*);
joining extremities of the one or two side panels (10A; 10A*, 10B*) along one or, respectively, two vertical connection lines (ST_{A}; ST_{A}*) to form the sidewall (11-14); and
forming four vertical ridges that shape the sidewall (11-14) into the four lateral sides (11, 12, 13, 14) by pinching the one or two side panels (10A; 10A*, 10B*) along four pinching lines (ST_{CR}) that do not extend fully to the bottom side (15) and stop at a distance (de) from the bottom side (15),
wherein joining of the extremities of the one or two side panels (10A; 10A*, 10B*) includes positioning each vertical connection lines (ST_{A}; ST_{A}*) at a location that does not coincide with any one of the vertical ridges.
